# EUROPEAN PATENT APPLICATION

(11) **EP 4 703 612 A1**
(43) Date of publication of application: **04.03.2026**
(21) Application number: 23935265.1
(22) Date of filing: 25.04.2023
(51) Int. Cl.: F16K 15/14, H01M 50/325

(54) **VALVE, VALVE COMPONENT, AND BATTERY UNIT**

(71) Applicant: NOK Corporation, Minato-ku Tokyo 105-8585 (JP)
(72) Inventor: NAGASHIMA, Jiro, Aso-shi, Kumamoto 869-2231 (JP)
(74) Representative: Global IP Europe Patentanwaltskanzlei
(86) International application number: PCT/JP2023/016311
(87) International publication number: WO 2024/224485

(57) **Abstract**

A valve (100) includes a valve component (10) formed of an elastic body and having an umbrella-shaped lip portion (11), and an attachment pin (20) that attaches the valve component (10) to an attachment object (for example, a top plate (212) of a case (210) of a battery) in a state of penetrating a central portion of the valve component (10).

## Description

### TECHNICAL FIELD

The present invention relates to a valve, a valve component, and a battery unit.

### BACKGROUND ART

A valve (check valve) for releasing a pressure and adjusting a pressure when an internal pressure of a closed space increases is known.

Such valves are described, for example, in Patent Documents 1 and 2.

The valves of Patent Documents 1 and 2 ("umbrella valve" in Patent Document 2) are constituted by an elastic body integrally having a shaft portion ("attachment handle portion" in Patent Document 2) inserted and fixed to an attachment object and an umbrella-shaped lip portion ("valve" in Patent Document 1 and "umbrella portion" of Patent Document 2) expanding radially from the shaft portion.

### CITATION LIST

### PATENT DOCUMENTS

Patent Document 1: JP 61-181169 A
Patent Document 2: JP 59-15864 A

### SUMMARY OF THE INVENTION

### PROBLEMS TO BE SOLVED BY THE INVENTION

According to the study of the inventor of the present application, in the techniques of Patent Documents 1 and 2, there is room for improvement from the viewpoint of achieving both a stable attachment state with respect to the attachment object and pressure release at a desired release pressure.

The present invention has been made in view of the above problems, and provides a valve, a valve component, and a battery unit having a structure capable of easily implementing a stable attachment state of the valve to an attachment object and pressure release at a desired release pressure.

### MEANS FOR SOLVING THE PROBLEM

According to the present invention, there is provided a valve including:
a valve component formed of an elastic body and having an umbrella-shaped lip portion; and
an attachment pin that attaches the valve component to an attachment object in a state of penetrating a central portion of the valve component.

Furthermore, according to the present invention, there is provided a valve component formed of an elastic body and having an umbrella-shaped lip portion, the valve component including:
a fixing hole for fixing the valve component, wherein
the fixing hole penetrates a central portion of the valve component.

Furthermore, according to the present invention, there is provided a battery unit including:
the valve according to the present invention; and
a battery including a case including a vent hole, and a cell unit arranged in the case, wherein
the valve is attached to the case, and the valve closes the vent hole.

### EFFECT OF THE INVENTION

According to the present invention, it is possible to achieve both a stable attachment state of a valve to an attachment object and pressure release at a desired release pressure.

### BRIEF DESCRIPTION OF THE DRAWINGS

[Fig. 1]Fig. 1 is a perspective cross-sectional view illustrating a valve according to an embodiment.
[Fig. 2]Fig. 2 is a cross-sectional view along a central axis of the valve according to the embodiment.
[Fig. 3]Fig. 3 is a plan view of the valve according to the embodiment.
[Fig. 4]Figs. 4A, 4B, and 4C are views illustrating valve components constituting the valve according to the embodiment, in which Fig. 4A is a perspective view, Fig. 4B is a cross-sectional view along a central axis, and Fig. 4C is a plan view.
[Fig. 5]Figs. 5A and 5B are views illustrating an attachment pin constituting the valve according to the embodiment, in which Fig. 5A is a perspective view and Fig. 5B is a plan view.
[Fig. 6]Fig. 6 is a diagram (cross-sectional view along the central axis) illustrating an example of behavior at the time of pressure release of the valve according to the embodiment.
[Fig. 7]Fig. 7 is a schematic cross-sectional view illustrating a battery unit according to the embodiment.

### DESCRIPTION OF EMBODIMENTS

Hereinafter, an embodiment of the present invention will be described with reference to the drawings. Note that, in all the drawings, similar components are denoted by the same reference numerals, and the description thereof will not be repeated.

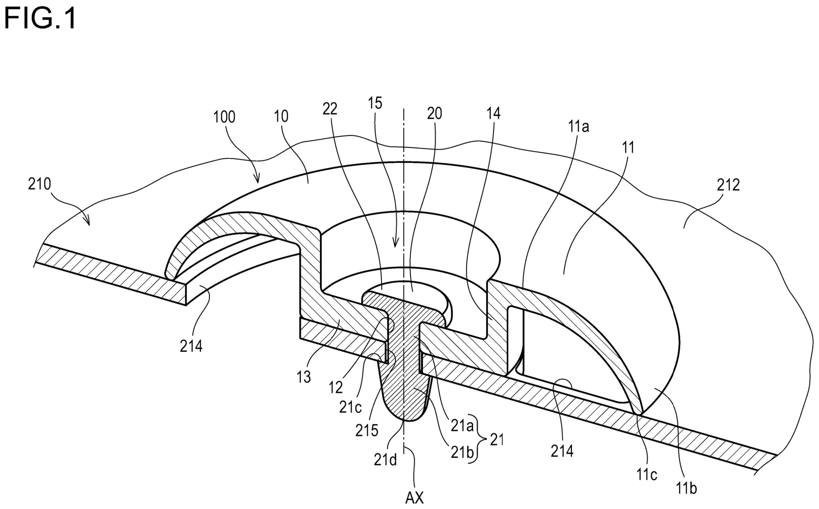

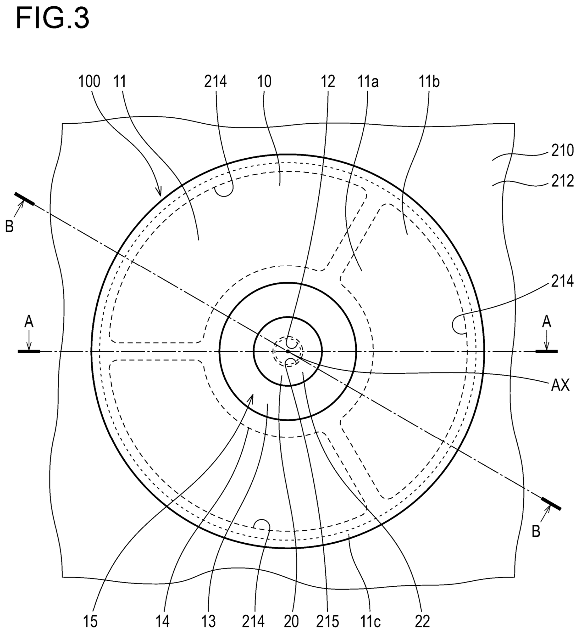

Fig. 1 is a perspective cross-sectional view taken along line A-A illustrated in Fig. 3.

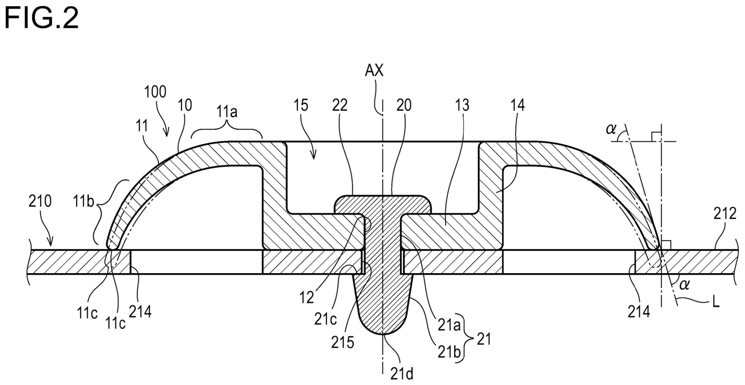

Fig. 2 is a cross-sectional view taken along line B-B illustrated in Fig. 3.

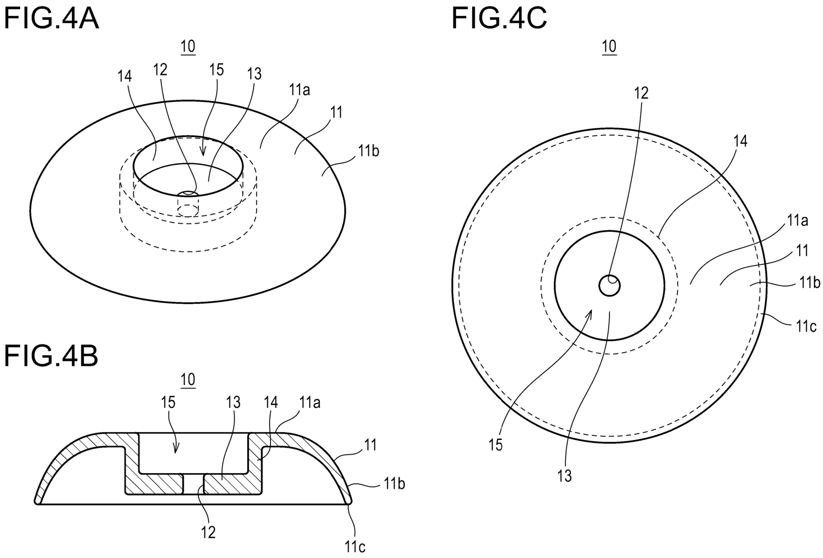

Fig. 4 is a cross-sectional view of a valve component 10 of a valve 100 taken along a position corresponding to line B-B illustrated in Fig. 3. Figs. 4A, 4B, and 4C illustrate the shape of the valve component 10 in a natural state before the valve 100 is attached to an attachment object. The shape of the valve component 10 in the natural state is also indicated by a two-dot chain line in Fig. 2.

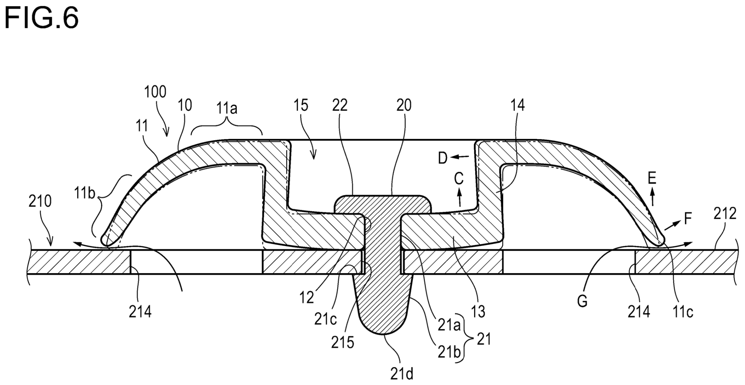

Fig. 6 is a cross-sectional view taken along line B-B illustrated in Fig. 3 similarly to Fig. 2. The shape of the valve component 10 indicated by a solid line in Fig. 6 is an example of a shape at the time of pressure release. The shape of the valve component 10 indicated by a two-dot chain line in Fig. 6 is a shape in a state other than the pressure release state.

Figs. 1 to 3 and 6 illustrate a state in which the valve 100 is attached to a top plate 212 (attachment object) of a case 210.

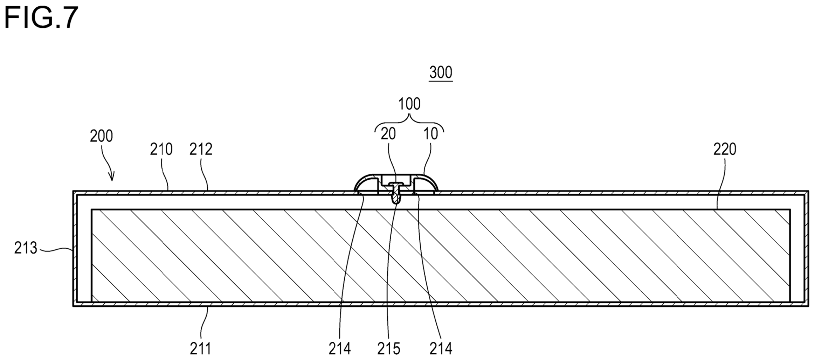

Fig. 7 is a cross-sectional view of a battery unit 300 taken along line B-B illustrated in Fig. 3.

In the following description, a direction along a central axis AX of the valve 100 is referred to as an axial direction, a radiation direction centered on the central axis AX is referred to as a radial direction, and a circumferential direction centered on the central axis AX is referred to as a circumferential direction.

Further, for the sake of convenience, in the direction along the central axis AX of the valve 100, an upward direction in Fig. 2 may be referred to as an upper direction, and a downward direction may be referred to as a lower direction. However, the upper and downward direction does not necessarily coincide with a direction when the valve 100 is attached to the attachment object.

As illustrated in Figs. 1 to 3, a valve 100 according to the present embodiment includes a valve component 10 formed of an elastic body and having an umbrella-shaped lip portion 11, and an attachment pin 20 that attaches the valve component 10 to an attachment object (for example, the top plate 212 of the case 210 of a battery 200) in a state of penetrating a central portion of the valve component 10.

According to the present embodiment, since the valve component 10 and the attachment pin 20 are separate bodies, characteristics (rigidity and the like) of the attachment pin 20 and the valve component 10 can be set as desired, so that a stable attachment state of the valve 100 and pressure release at a desired release pressure can be easily implemented.

The release pressure of the valve 100 is preferably in a range equal to or more than a certain degree and low pressure. According to the present embodiment, since the characteristics of the valve component 10 can be set as desired, the release pressure of the valve 100 can be easily controlled (set to a desired release pressure) with high accuracy.

In addition, since characteristics of the attachment pin 20 can be set as desired, a stable attachment state of the valve 100 can be implemented.

On the other hand, in the techniques of Patent Documents 1 and 2, since the shaft portion and the lip portion are integrally formed of the same material, it is difficult to individually set characteristics for the shaft portion and the lip portion, and it is not always easy to implement a stable attachment state of the valve and pressure release at a desired release pressure.

Note that, according to the present embodiment, since only the number of components constituting the valve 100 is, for example, two, it is possible to suppress the production cost from becoming excessive, and it is also possible to suppress the number of man-hours required for attaching the valve 100 to the attachment object.

Hereinafter, the present embodiment will be described in more detail.

The elastic body constituting the valve component 10 is formed of a material having high elasticity (rubber-like elastic body) such as rubber (synthetic rubber or natural rubber) or a thermoplastic elastomer (thermoplastic resin rubber elastic body), and has flexibility. As an example, the valve component 10 is constituted of EPDM (ethylene propylene diene rubber).

The attachment pin 20 is preferably constituted of a material having higher rigidity (high Young's modulus) than the valve component 10, and the attachment pin 20 is constituted of, for example, resin or metal.

Since the attachment pin 20 is constituted of a resin or the like having higher rigidity than the valve component 10, a stable attachment state of the valve 100 can be easily implemented, and for example, even when a sudden increase in pressure in the closed space occurs, a state in which the valve 100 is stably attached can be maintained.

Since the attachment pin 20 has higher rigidity than the valve component 10 (the valve component 10 has lower rigidity than the attachment pin 20), the valve component 10 is more easily deformed than the attachment pin 20. Thus, the release pressure of the valve 100 can be set to a lower pressure.

As illustrated in Figs. 1 to 4B, in the case of the present embodiment, the lip portion 11 is curved in a convex (convex upward in Figs. 2 and 4B) dome shape in a direction away from the attachment object.

Since the lip portion 11 has a dome shape, the mechanical strength (deformation resistance) of the lip portion 11 can be improved, so that the release pressure of the valve 100 can be easily set to be equal to or more than a certain level. This is because the shape of the lip portion 11 can be maintained in a substantially constant shape even if an tightening margin when the valve component 10 is attached to the attachment object is sufficiently ensured.

The tightening margin is a height difference (distance in the direction along the central axis AX) between a peripheral edge 11c of the lip portion 11 indicated by a solid line in Fig. 2 (lower edge of the lip portion 11) and the peripheral edge 11c of the lip portion 11 indicated by a two-dot chain line in Fig. 2.

When the valve component 10 is attached to the attachment object and the peripheral edge 11c is brought into pressure contact with the attachment object, the valve component 10 is deformed in a direction in which the peripheral edge 11c is lifted (mainly, the lip portion 11 is deformed), and has a shape indicated by a solid line in Fig. 2.

In the case of the present embodiment, an inclination angle α (Fig. 2) of a peripheral edge portion 11b of the lip portion 11 is equal to or more than 45 degrees, for example, equal to or more than 60 degrees.

Thus, since the peripheral edge portion 11b of the lip portion 11 is brought into pressure contact with the attachment object at an angle closer to vertical, it is easier to set the release pressure to be equal to or more than a certain level.

The inclination angle α is an angle with respect to a plane orthogonal to the central axis AX of the valve 100.

Here, the inclination angle α is an inclination angle α of the outer surface among an inner surface (lower surface in Fig. 2) and an outer surface (upper surface in Fig. 2) of the lip portion 11. That is, the inclination angle α is an angle formed between a tangent line L (Fig. 2) to a lower end portion of the peripheral edge portion 11b of the lip portion 11 and a straight line orthogonal to the central axis AX in the cross section along the central axis AX.

Here, even in a state where the valve 100 is attached to the attachment object as illustrated in Fig. 2, the inclination angle α is equal to or more than 45 degrees, for example, equal to or more than 60 degrees. However, even if the inclination angle α is equal to or more than 45 degrees (for example, equal to or more than 60 degrees) when the valve component 10 is in the natural state before the valve 100 is attached to the attachment object, the inclination angle α may be less than 45 degrees when the valve 100 is attached to the attachment object.

In the present embodiment, the attachment object is the top plate 212 of the case 210, and the top plate 212 has a flat plate shape orthogonal to the central axis AX. Thus, the inclination angle α coincides with the angle of the peripheral edge portion 11b with respect to the plane direction of the top plate 212.

In the present embodiment, the peripheral edge 11c of the lip portion 11 is continuous in a circling shape without discontinuity at 360 degrees.

Thus, since the peripheral edge 11c of the lip portion 11 can be brought into pressure contact with the attachment object in a circling manner without discontinuity at 360 degrees, it is easy to set the release pressure of the valve 100 to be equal to or more than a certain degree.

Note that, when the attachment object is flat, by setting (securing) the tightening margin over the entire circumference of 360 degrees of the peripheral edge 11c of the lip portion 11, the peripheral edge 11c of the lip portion 11 can be brought into pressure contact with the attachment object in a circumferential manner without discontinuity at 360 degrees.

As illustrated in Fig. 4B, in the natural state before the valve component 10 is attached to the attachment object, the peripheral edge 11c is at a position lower than a lower surface of the fixing portion 13 over the entire circumference by 360 degrees.

In the present embodiment, a wall thickness of the lip portion 11 at the peripheral edge portion 11b of the lip portion 11 is smaller than a wall thickness of the lip portion 11 at a central portion 11a of the lip portion 11.

Here, the peripheral edge portion 11b of the lip portion 11 includes a portion (in Fig. 2, a portion positioned above an upper surface of the top plate 212) that is separated from the attachment object (the top plate 212 of the case 210) as illustrated in Fig. 2. The central portion 11a of the lip portion 11 is a portion connected to an upper end of an annular wall portion 14 described below.

Since the wall thickness of the peripheral edge portion 11b of the lip portion 11 is small, behavior of deforming the peripheral edge portion 11b so as to be turned up at the time of pressure release is facilitated, so that the release pressure of the valve 100 can be set to a lower pressure.

The wall thickness of the peripheral edge portion 11b decreases toward the peripheral edge 11c, for example. This structure allows the peripheral edge portion 11b in the vicinity of the peripheral edge 11c to be deformed easily.

In the present embodiment, the valve component 10 includes a fixing portion 13 that has a fixing hole 12 through which the attachment pin 20 is inserted, is fixed to the attachment object by the attachment pin 20, and is disposed along the attachment object, and an annular wall portion 14 standing in a direction away from the attachment object from the peripheral edge portion of the fixing portion 13. The lip portion 11 protrudes outward (expands radially outward) from an end portion (the upper end of the annular wall portion 14 in Fig. 2) of the annular wall portion 14 in a standing direction.

Thus, the valve component 10 has a shape having a recess 15 (counterbore) defined by an upper surface of the fixing portion 13 and an inner peripheral surface of the annular wall portion 14.

With such a structure, since bending rigidity of the fixing portion 13 can be reduced as compared with a structure in which the fixing portion 13 has a dimension equal to a dimension of the lip portion 11 in the direction of the central axis AX, the fixing portion 13 is also easily deformed at the time of pressure release. Thus, since behavior of separating the peripheral edge 11c of the lip portion 11 from the attachment object at the time of pressure release is facilitated, the release pressure of the valve 100 can be set to a low pressure.

In addition, since the annular wall portion 14 can also be deformed at the time of pressure release, the behavior of separating the peripheral edge 11c of the lip portion 11 from the attachment object at the time of pressure release is facilitated, and this also makes it possible to set the release pressure of the valve 100 to a low pressure.

Further, since a head portion 22 of the attachment pin 20 is surrounded by the annular wall portion 14, the attachment pin 20 can be protected by the annular wall portion 14. Therefore, the influence of the outside of the annular wall portion 14 on the attachment pin 20 can be reduced.

Furthermore, since the attachment pin 20 is inserted inside the annular wall portion 14 when the valve 100 is attached to the attachment object, it is possible to suppress damage to the lip portion by the attachment pin 20 when the attachment pin 20 is inserted.

In addition, since the lip portion 11 protrudes from the annular wall portion 14 to the periphery after the annular wall portion 14 rises from the fixing portion 13, it is possible to easily implement a structure in which the inclination angle α of the peripheral edge portion 11b of the lip portion 11 is a steeper angle.

The fixing portion 13 is formed in, for example, a flat plate shape, and the fixing hole 12 is formed in a central portion of the fixing portion 13. The fixing hole 12 vertically penetrates the fixing portion 13. The central axis of the fixing hole 12 coincides with the central axis AX. The fixing hole 12 is, for example, a round hole. The planar shape of the fixing portion 13 is a donut shape centered on the central axis AX.

The radius of the fixing portion 13 is, for example, larger than a thickness dimension (dimension in the direction along the central axis AX) of the fixing portion 13, and is equal to or more than twice the thickness dimension. Thus, the flexibility of the fixing portion 13 can be sufficiently secured.

The annular wall portion 14 is formed in, for example, a cylindrical shape centered on the central axis AX.

The magnitude relationship between a wall thickness (thickness dimension in the radial direction) of the annular wall portion 14 and the thickness dimension of the fixing portion 13 is not particularly limited, but in the case of the present embodiment, the wall thickness of the annular wall portion 14 is smaller than the thickness dimension of the fixing portion 13. This structure allows the annular wall portion 14 to be deformed more easily at the time of pressure release.

The magnitude relationship between the wall thickness of the lip portion 11 and the thickness dimension of the fixing portion 13 is not particularly limited, but in the case of the present embodiment, the wall thickness of the lip portion 11 is smaller than the thickness dimension of the fixing portion 13. This structure allows the lip portion 11 to be deformed more easily at the time of pressure release.

In addition, the magnitude relationship between the wall thickness of the lip portion 11 and the wall thickness of the annular wall portion 14 is not particularly limited, but in the case of the present embodiment, the wall thickness of the lip portion 11 is equal to or less than the wall thickness of the annular wall portion 14. This structure allows the lip portion 11 to be deformed easily at the time of pressure release. More specifically, the wall thickness of the central portion 11a of the lip portion 11 is, for example, equal to the wall thickness of the annular wall portion 14 or slightly smaller than the wall thickness of the annular wall portion 14.

The magnitude relationship between the radius of the fixing portion 13 and a dimension of the annular wall portion 14 in the direction of the central axis AX, that is, a vertical dimension of the annular wall portion 14 (distance from the lower surface of the fixing portion 13 to the upper end of the annular wall portion 14) is not particularly limited, but in the case of the present embodiment, the radius of the fixing portion 13 is larger than the vertical dimension of the annular wall portion 14. This facilitates deformation of the fixing portion 13. In the present embodiment, the fixing portion 13 is formed to be thicker than the annular wall portion 14, but even in this case, the fixing portion 13 can be deformed at the time of pressure release.

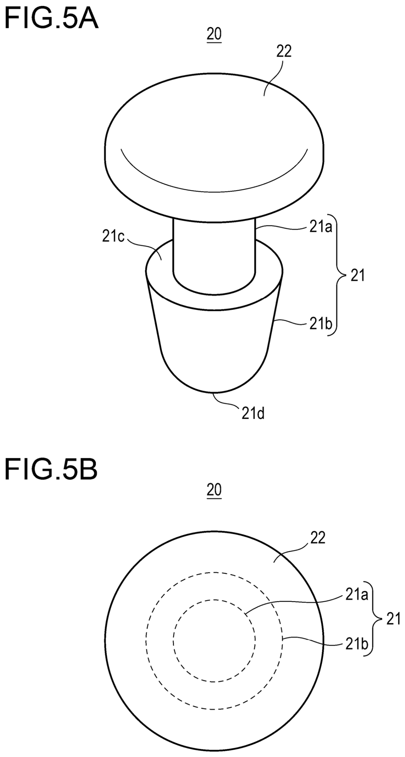

As illustrated in Figs. 5A and 5B, the attachment pin 20 includes a shaft portion 21 and a head portion 22 formed at one end (upper end) of the shaft portion 21. The head portion 22 has a larger dimension (larger diameter) in the radial direction than one end (upper end) of the shaft portion 21. A lower surface of the head portion 22 is formed flat, for example, and is in contact with the upper surface of the fixing portion 13 (see Fig. 2).

The central axis of the shaft portion 21 coincides with the central axis AX.

The shaft portion 21 includes a linear portion 21a having a linear shape (having a constant diameter dimension) and penetrating the fixing hole 12 and an attachment hole 215, and a protruding portion 21b protruding from a distal end (lower end) of the linear portion 21a in an extending direction of the linear portion 21a. The linear portion 21a has, for example, a cylindrical shape. In the present embodiment, the length dimension of the linear portion 21a is set to be equal to or slightly smaller than the total value of the thickness dimension of the fixing portion 13 and a thickness dimension of the top plate 212.

At a boundary between the linear portion 21a and the protruding portion 21b, a diameter dimension of the shaft portion 21 discontinuously changes, and a diameter dimension of the protruding portion 21b is larger than a diameter dimension of the linear portion 21a (see Fig. 2). Therefore, a step surface exists at a boundary between the linear portion 21a and the protruding portion 21b, and this step surface constitutes a barbed portion 21c that engages with the attachment object.

That is, the attachment pin 20 has the barbed portion 21c that engages with the attachment object.

The protruding portion 21b is formed in a tapered shape from the barbed portion 21c toward the distal end of the protruding portion 21b. The distal end of the protruding portion 21b has, for example, a rounded shape. Note that a diameter dimension in the vicinity of the distal end of the protruding portion 21b may be smaller than the diameter dimension of the linear portion 21a.

Examples of functions required for the valve 100 include <1> a function of suppressing intrusion of foreign matter (for example, water, muddy water, dust, and the like) from the outside to the inside of a device to which the valve 100 is attached (external sealing function), <2> a function of implementing pressure release at a low pressure (for example, several kPa), <3> a function of implementing gas release at a large flow rate, and <4> a function of easily attaching the valve 100 and stably maintaining the valve 100 in an attached state even when the internal pressure rises.

The valve 100 is configured to release the pressure, for example, when the pressure in the closed space becomes larger than the pressure in the external space by equal to or more than several kPa (for example, 5 kPa). That is, the valve release pressure of the valve 100 is set to several kPa, for example.

The valve 100 is preferably capable of releasing a gas of several thousand L/min, for example, 5000 to 6000 L/min at the time of pressure release, but may be capable of releasing a gas of 10000 L/min or more.

The target flow rate can also be set by adjusting hardness of the material constituting the valve component 10.

In addition, it is possible to set a target valve release pressure by changing the tightening margin.

The valve 100 is configured as described above.

The valve 100 can be attached to the attachment object as follows, for example.

First, the valve component 10 is disposed on the attachment object so as to close a vent hole 214 of the attachment object (for example, the top plate 212 of the case 210) with the valve component 10. That is, the valve component 10 is disposed on the upper surface of the top plate 212. At this time, the fixing hole 12 of the valve component 10 is aligned with the attachment hole 215.

Next, the protruding portion 21b of the attachment pin 20 passes through the recessed portion 15, the fixing hole 12, and the attachment hole 215 in this order, and penetrates to the side (lower side) opposite to the side (upper side) on which the valve component 10 is disposed with reference to the top plate 212. Thus, the barbed portion 21c is engaged with a lower surface of the top plate 212, and the valve component 10 and the entire valve 100 are stably fixed to the top plate 212 by the attachment pin 20.

Noted that, for example, an operator can easily attach the valve 100 by hand (with bare hands or the like), and there is no need to use a tool.

Next, an example of an operation of the valve 100 will be described with reference to Fig. 6.

When the pressure in the closed space rises to be equal to or more than the valve release pressure, the gas flowing into the lip portion 11 through the vent hole 214 pushes up the lip portion 11 to escape to the external space.

At this time, as described below, for example, the pressure is released by an operation in which deformation of the fixing portion 13, deformation of the annular wall portion 14, and deformation of the lip portion 11 (particularly, significant deformation at the peripheral edge portion 11b) are combined.

Describing the deformation of the fixing portion 13, as indicated by an arrow C in Fig. 6, the fixing portion 13 is bent and deformed in a direction in which a portion of the fixing portion 13 on a side far from the central axis AX is lifted from the attachment object (top plate 212).

Due to such deformation of the fixing portion 13, for example, the annular wall portion 14 is displaced in a direction in which the upper end is narrowed (a direction indicated by an arrow D in Fig. 6), and accordingly, the lip portion 11 is lifted more greatly in a portion farther from the central axis AX (behaves as indicated by an arrow E in Fig. 6). In addition, the annular wall portion 14 itself is also deformed in a direction in which the upper end is narrowed (a direction indicated by the arrow D in Fig. 6), and even when the annular wall portion 14 is deformed, the lip portion 11 is lifted more greatly in a portion farther from the central axis AX. Here, since the valve 100 has the recess 15, the fixing portion 13 and the annular wall portion 14 can be deformed as described above.

In addition, the peripheral edge portion 11b of the lip portion 11 is deformed so that the distal end side (the peripheral edge 11c side) is turned outward as indicated by an arrow F in Fig. 6.

As a result, a gap is generated between the peripheral edge 11c and the attachment object (top plate 212), so that the gas in the closed space escapes (is released) to the outside as indicated by arrow G in Fig. 6.

Note that, in Fig. 6, for the sake of convenience, the deformation of the valve component 10 is illustrated in a symmetrical shape centered on the central axis AX, but in practice, it is also conceivable that only a specific portion (it may be a part or a plurality of parts) in the circumferential direction of the valve component 10 is deformed.

Next, the valve component 10 according to the present embodiment will be described.

The valve component 10 according to the present embodiment is the valve component 10 of the valve 100 according to the present embodiment.

That is, the valve component 10 according to the present embodiment is the valve component 10 formed of an elastic body and having the umbrella-shaped lip portion 11, and has the fixing hole 12 for fixing the valve component 10, and the fixing hole 12 penetrates the central portion of the valve component 10.

As illustrated in Fig. 7, the valve 100 according to the present embodiment can be used by being attached to a case 210 of the battery 200 of an electric vehicle, a hybrid vehicle, or the like, for example.

The case 210 includes, for example, a bottom plate 211, the top plate 212 disposed to face the bottom plate 211 while being separated from the bottom plate 211, and a side wall 213 connecting a peripheral edge of the bottom plate 211 and a peripheral edge of the top plate 212 to each other.

One or more vent holes 214 and the attachment hole 215 in which the attachment pin 20 is inserted and fixed are formed in the top plate 212 so as to penetrate the top plate 212. As an example, as illustrated in Fig. 3, a plurality of (for example, three) vent holes 214 having the same shape and the same size are arranged (equally arranged) at equal angular intervals around the attachment hole 215. Note that the vent holes 214 are disposed at equal distances from the attachment hole 215.

The shape of the vent holes 214 is not particularly limited, but may be, for example, an annular fan shape extending in an arc shape around the central axis AX.

For example, in the top plate 212, at least a portion to which the valve 100 is attached (a portion covered by the valve component 10) is formed flat (flat plate shape).

The battery 200 includes a cell unit 220 housed in the case 210 in addition to the case 210. The cell unit 220 is formed by unitizing a plurality of battery cells.

By attaching the valve 100 to the battery 200, the battery unit 300 including the battery 200 and the valve 100 is configured. The battery unit 300 has a closed space including an internal space of the case 210 and a space inside the lip portion 11 therein.

As described above, the battery unit 300 according to the present embodiment includes the valve 100 according to the present embodiment and the battery 200.

The battery 200 includes the case 210 having the vent holes 214 and the cell unit 220 disposed in the case 210.

The valve 100 is attached to (the top plate 212 of) the case 210, and the valve 100 closes the vent holes 214.

According to the battery unit 300 of the present embodiment, when thermal runaway occurs in the battery cells constituting the cell unit 220, gas release at a large flow rate as described above is possible.

Although the embodiment has been described above with reference to the drawings, these are examples of the present invention, and various configurations other than the above can be adopted.

For example, in the above description, an example has been described in which the valve 100 is used by being attached to the case 210 of the battery 200, but the valve 100 can also be used by being attached to a device other than the battery 200. For example, the valve 100 may be used by being attached to a case of a module unit other than the battery 200, such as a power control unit (PCU) for controlling power of an electric vehicle or the like.

Further, in the above description, the example in which the lip portion 11 has a dome shape has been described, but the lip portion 11 may have a shape other than the dome shape. For example, the lip portion 11 may be frustoconical.

Furthermore, in the above description, the example in which the valve component 10 has a shape having a counterbore, that is, the example in which the valve component 10 has the fixing portion 13, the annular wall portion 14, and the recess 15 has been described. However, the fixing portion 13 of the valve component 10 may be formed to have a thickness dimension similar to the dimension of the lip portion 11 in the direction of the central axis AX, and the valve component 10 need not have the annular wall portion 14 and the recess 15.

Further, in the above description, an example has been described in which the wall thickness of the peripheral edge portion 11b is smaller than the wall thickness of the central portion 11a of the lip portion 11. However, the central portion 11a and the peripheral edge portion 11b may have the same wall thickness.

Furthermore, in the above description, the example in which the attachment pin 20 has the barbed portion 21c has been described, but the attachment pin 20 need not have the barbed portion 21c and may be fixed to the attachment object only by friction due to press fitting.

The present embodiment includes the following technical ideas.
(1) A valve including:
   a valve component formed of an elastic body and having an umbrella-shaped lip portion; and
   an attachment pin that attaches the valve component to an attachment object in a state of penetrating a central portion of the valve component.
(2) The valve according to (1), wherein the lip portion is curved in a dome shape protruding in a direction away from the attachment object.
(3) The valve according to (1) or (2), wherein an inclination angle of a peripheral edge portion of the lip portion is equal to or more than 45 degrees.
(4) The valve according to any one of (1) to (3), wherein a peripheral edge of the lip portion is continuous in a circling shape without discontinuity at 360 degrees.
(5) The valve according to any one of (1) to (4), wherein a wall thickness at a peripheral edge portion of the lip portion is smaller than a wall thickness at a central portion of the lip portion.
(6) The valve according to any one of (1) to (5), wherein
   the valve component includes:
   a fixing portion that has a fixing hole through which the attachment pin is inserted, is fixed to the attachment object by the attachment pin, and is disposed along the attachment object; and
   an annular wall portion that stands in a direction away from the attachment object from a peripheral edge portion of the fixing portion, and
   the lip portion protrudes outward from an end portion of the annular wall portion in a standing direction.
(7) The valve according to any one of (1) to (6), wherein the attachment pin has a barbed portion that engages with the attachment object.
(8) The valve according to any one of (1) to (7), wherein the attachment pin is constituted of resin.
(9) A valve component formed of an elastic body and having an umbrella-shaped lip portion, the valve component including:
   a fixing hole for fixing the valve component, wherein
   the fixing hole penetrates a central portion of the valve component.
(10) A battery unit including:
   the valve according to any one of (1) to (8); and
   a battery including a case including a vent hole, and a cell unit arranged in the case, wherein
   the valve is attached to the case, and the valve closes the vent hole.

### REFERENCE SIGNS LIST

- 10: Valve component
- 11: Lip portion
- 11a: Central portion
- 11b: Peripheral edge portion
- 11c: Peripheral edge
- 12: Fixing hole
- 13: Fixing portion
- 14: Annular wall portion
- 15: Recess
- 20: Attachment pin
- 21: Shaft portion
- 21a: Straight portion
- 21b: Protruding portion
- 21c: Barbed portion
- 21d: Distal end
- 22: Head portion
- 100: Valve
- 200: Battery
- 210: Case
- 211: Bottom plate
- 212: Top plate (attachment object)
- 213: Side wall
- 214: Vent hole
- 215: Attachment hole
- 220: Cell unit
- 300: Battery unit

## Claims

1. A valve comprising:
a valve component formed of an elastic body and having an umbrella-shaped lip portion; and
an attachment pin that attaches the valve component to an attachment object in a state of penetrating a central portion of the valve component.

2. The valve according to claim 1, wherein the lip portion is curved in a dome shape protruding in a direction away from the attachment object.

3. The valve according to claim 1 or 2, wherein an inclination angle of a peripheral edge portion of the lip portion is equal to or more than 45 degrees.

4. The valve according to any one of claims 1 to 3, wherein a peripheral edge of the lip portion is continuous in a circling shape without discontinuity at 360 degrees.

5. The valve according to any one of claims 1 to 4, wherein a wall thickness at a peripheral edge portion of the lip portion is smaller than a wall thickness at a central portion of the lip portion.

6. The valve according to any one of claims 1 to 5, wherein
the valve component includes:
a fixing portion that has a fixing hole through which the attachment pin is inserted, is fixed to the attachment object by the attachment pin, and is disposed along the attachment object; and
an annular wall portion that stands in a direction away from the attachment object from a peripheral edge portion of the fixing portion, and
the lip portion protrudes outward from an end portion of the annular wall portion in a standing direction.

7. The valve according to any one of claims 1 to 6, wherein the attachment pin has a barbed portion that engages with the attachment object.

8. The valve according to any one of claims 1 to 7, wherein the attachment pin is constituted of resin.

9. A valve component formed of an elastic body and having an umbrella-shaped lip portion, the valve component comprising:
a fixing hole for fixing the valve component, wherein
the fixing hole penetrates a central portion of the valve component.

10. A battery unit comprising:
the valve according to any one of claims 1 to 8; and
a battery including a case including a vent hole, and a cell unit arranged in the case, wherein
the valve is attached to the case, and the valve closes the vent hole.
